Europäisches Patentamt

(19) European Patent Office

·Office européen des brevets

(11) Publication number: **0 103 438**
**B1**

(12) **EUROPEAN PATENT SPECIFICATION**

(45) Date of publication of patent specification: **23.07.86**

(21) Application number: **83304995.0**

(22) Date of filing: **30.08.83**

(51) Int. Cl.⁴: **H 04 N 7/10**

(54) **Television and distribution network.**

(30) Priority: **07.09.82 GB 8225479**
**29.09.82 GB 8227845**

(43) Date of publication of application:
**21.03.84 Bulletin 84/12**

(45) Publication of the grant of the patent:
**23.07.86 Bulletin 86/30**

(84) Designated Contracting States:
**AT BE CH DE FR GB IT LI LU NL SE**

(56) References cited:
**DE-A-2 141 997**
**DE-A-2 260 621**
**US-A-4 090 220**

**ELEKTRISCHES NACHRICHTENWESEN, vol.
49, no. 3, 1974, Paris, Stuttgart H. HÄBERLE,
P.C. ULRICH, W. ZSCHUNKE "Digitale
Übertragung von Fernsehsignalen über
Satelliten" pages 343-348**

(73) Proprietor: **THORN EMI PLC**
**Thorn Emi House Upper Saint Martin's Lane
London, WC2H 9ED (GB)**

(72) Inventor: **Barnes, Barnard Thomas Peter**
**23 Medina Way Upper Stratton
Swindon Wiltshire, SW2 6NW (GB)**
Inventor: **Topping, Douglas Randall Peter
Bentley Middle Street Nazeing
Waltham Abbey Essex EN9 2LB (GB)**

(74) Representative: **Fleming, Ian Alexander et al
THORN EMI Patents Limited The Quadrangle
Westmount Centre Uxbridge Road
Hayes Middlesex, UB4 0HB (GB)**

Courier Press, Leamington Spa, England.

**0 103 438**

Description

The present invention relates to a cable television distribution network, and to a television receiver for use in such a network.

U.S. Patent Specification No. 4090220 discloses a cable television system in which each subscriber is connected to an exchange by a video conductor pair and by a control conductor pair, the latter being used to convey signals from the subscriber to the exchange for the operation of switches to connect the selected television channel to the subscriber's video pair. In addition, digital data is transmitted from a central station to subscribers over the video cable by frequency multiplexing, and the subscriber sends data back to the central station in the same way.

The present invention provides a cable television distribution network comprising means to send command signals in teletext format along a transmission line to a television receiver, whereby, in use, said command signals initiate automatic operation of selectively the receiver or a remote device, via said receiver, in accordance with said command signals, means, in said receiver, to effect an operation or operations in accordance with said command signals and means, in said receiver, to effect a reply in accordance with said command signals.

The present invention also provides a television receiver for use with a cable television distribution network, the receiver having means to identify command signals in teletext format which, in use, are sent along a transmission line to the receiver, means to effect an operation or operations of selectively the receiver or a remote device, via said receiver, in accordance with said command signals, and means to effect a reply in accordance with said command signals.

Preferably the command signals are arranged to perform interrogations on the television receiver concerning a specific subject, and the reply-effecting means is capable of producing an appropriate response to said interrogations.

Preferably the reply-effecting means of a television receiver comprises a pulse generator operable to produce a pulse to signify an affirmative response to interrogations effected by the command signals, such pulse being for return along the transmission line towards the source of the command signals.

Preferably the reply-effecting means of a television receiver comprises a pulse generator operable to produce a pulse of any one of a number of frequencies, each value of frequency representing a particular response to interrogations effected by the command signals, such pulse being for return along the transmission line towards the source of the command signals.

The command signals are not for actual display on the receiver but for effecting operation on the receiver or another apparatus via the receiver. One such operation can be the display of an image on the screen, the data for the image being transmitted subsequent to the relevant command signal.

The command signals prepare the receiver for sending a return signal along the transmission lines towards the source of the command signals. Also the command signals may instruct the receiver to reply in a specified form. There may be a micro-computer at or adjacent the source of the command signals to effect control of the transmission of the command signals and the reception of the return signals.

The command signal may be effective to operate the receiver or to alter its output or to operate apparatus remote from that (but effected via) the receiver, or any combination of these possibilities.

The command signal may be a single line in teletext format which precedes each field of line signals in a television programme for display, so that only receivers capable of processing the command signals are able to correctly display that programme.

Preferably, in a television receiver, the means to identify the command signals, in use, examines a particular section of data in the teletext format and recognises data indicating that the command signal is not a standard broadcast teletext signal.

Preferably a command signal includes information on how it and/or the succeeding data signal can be de-crypted to a form suitable for display or for operation on the receiver or a remote apparatus; the encryption may be in the form of random inversion (or some other modification) of the video signal, or of random chopping of the audio signal or of encryption by bit-inversion of a normal teletext signal, or variation of the d.c. level of the audio signal, or any combination of such possibilities whether synchronised or not.

In one form the command signals can superimpose an insert display on the screen during a broadcast or line-transmitted programme, thereby enabling easy updating of information.

In one form, command signals can effect activation of the television receiver.

The present invention also provides an add-on unit for a conventional television receiver (whether with no teletext facilities at all or only with conventional broadcast teletext facilities) to modify it so as to embody any of the features described elsewhere in this specification.

In one form of this invention, the broadcast network incorporates a time division multiplex system and the encryption means comprises means to effect a change in the processing of the signals for broadcast. Once received by the television receiver, the broadcast signals can be decrypted in a manner substantially corresponding to that described elsewhere in this specification.

Preferably the time division multiplex system corresponds to that proposed by the Independent Broadcasting Authority and known by the title "Multiplexed Analogue Component" system.

The present invention is applicable to any suitable topological arrangement of signal source,

2

**0 103 438**

transmission line and receivers. Thus for example the cable network may be of the "Tree and Branch" type in which all the channels are fed into a main trunk line from which there extend a number of branches serving each subscriber individually. Alternatively the network may be of the "Star System" type (otherwise known as the "Switched System"), in which trunk lines carry all the channels to switching points which route selected services to individual subscribers. In a modification the network may be arranged to be a combination of the "Tree and Branch" and the "Star System" types.

A network embodying the present invention may utilize any suitable form of transmission line for example an electrically conductive line of co-axial or other metal-wired cable or a light-transmitting line incorporating optical fibre(s), or a suitable combination of each.

In order that the invention may more clearly be understood a description is now given by way of example only, reference being made to the accompanying drawings in which:—

Figure 1 shows part of a domestic subscriber cable network;

Figure 2 shows schematically the byte distribution in a standard broadcast teletext signal;

Figure 3 shows schematically the byte distribution in part of a command signal used in the present invention; and

Figure 4 shows the format of signals used in another network of the present invention;

Figures 5a, 5b and 5c shows the hamming code bytes, the tests for even parity and the decoding action respectively;

Figure 6 shows the routing appropriate to Figures 5a, b and c;

Figure 7 shows the allocation of function addresses in store;

Figure 8 shows the bit allocation in a command signal;

Figure 9 shows the control signal byte allocation;

Figure 10 shows a method of polling and cuing time displacement of channels and return path frequencies; and

Figure 11 shows global Poll routing and timing system.

The cable network has a central store and control unit 1 connected to a number of main transmission lines 2 from which are tapped spurs 3 linked to domestic television receivers (of which only one, 4, is shown). In operation, the central unit 1 sends command signals in teletext format down the main transmission lines 2 to operate on either the receiver 4 or a remote device (via the receiver 4) e.g. keyboard 5, heating system 6 or security system 7; also the unit 1 can process any signals returning from receiver 4 (including any originating from the remote devices) and take appropriate action.

Television receiver 4 has a decoder which can process both the standard broadcast teletext signals and also the command signals from unit 1. This decoder may, for example, incorporate a conventional Teletext processor, in which case the equipment for the cable network is cost effective by using a processor for which there is an existing large market. If the decoder incorporates a processor which is a development, or an advance, of the conventional Teletext processor, then the equipment for the cable network is again cost-effective by using a processor for which there is also the potential of another large market. Moreover as many of the subscribers to the cable network will desire the Teletext facility anyway, it is advantageous to avoid duplicating unnecessarily processing equipment.

All the channels of programmes sent along the main transmission lines 2 by unit 1 are synchronised but with the field sync period of adjacent channels being staggered in time.

One form of command signal instructs the decoder to process the next signal which arrives in a specified way and then to display that signal on the screen. Thus if every field scan of a television programme is preceded by such a command signal, receivers without the appropriate decoder are prevented from properly displaying the programme.

Another form of command signal prepares the decoder to activate a transmitter in the receiver 4 in order to send a reply signal back to unit 1. This reply may relate, for example, to a reading of a meter (e.g. electricity, gas or water), to the opinion of the viewer of a programme presently being shown or to the ordering of goods from shops.

Another form of command signal instructs the decoder to activate apparatus remote from the television receiver, for example the heating system 6 or a security system 7 or to report the current status of such apparatus.

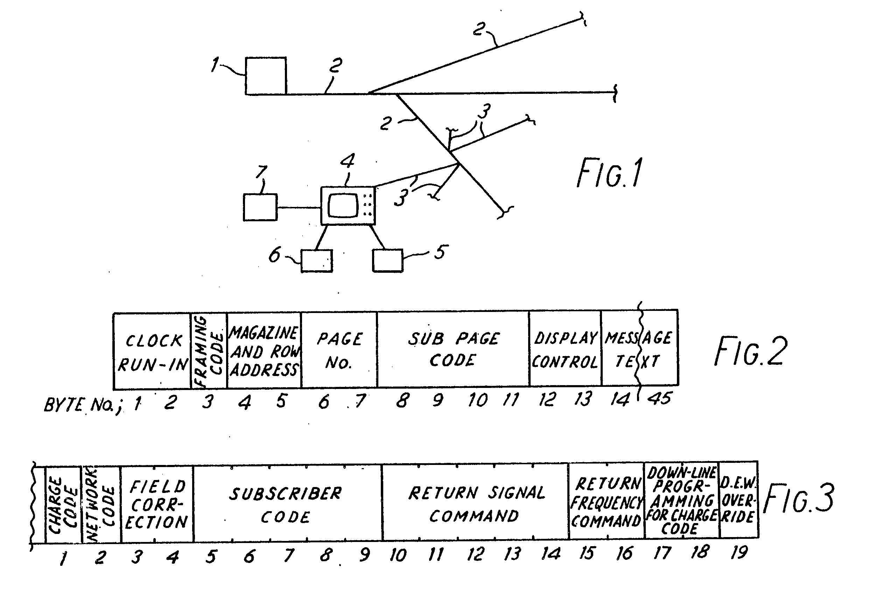

A normal page header line of teletext has a first section of 13 bytes of identification information and then 32 bytes of message text as shown schematically in Figure 2. Each command signal has an equivalent first section but in this case the "Sub page code" bytes remain constant using a unique code which is never given in a normal broadcast teletext line; in this way the decoder can readily distinguish between a broadcast teletext signal and a command signal from unit 1 by examining the "Sub page code" bytes. Also bytes 4 to 7 of each command signal have values corresponding to "Page 100, Page header" because the decoder automatically selects the line with this value for initial display.

As shown in Figure 3, the second section of each command signal has information bytes identifying the charge code and the subscriber and instructing the decoder on what action to take. More specifically, the first byte indicates the charge code level of the signal so that, unless the decoder has a charge value equal to or above that of the signal (i.e. the subscriber has paid for the services of the channel for which this signal is a part), the decoder does not receive the instructions contained in the command signal to decrypt

3

# 0 103 438

the video signals. The charge code level which is an Electrically Alterable Read Only Memory (EAROM) component within the decoder can be changed by suitable down-line programming from unit 1.

The next byte in the signal indicates the code for the specific network so that a decoder programmed for use in one network cannot be used in a different network, unless of course there is an authorised change of the hard-wired or ROM component responsible for the network code in the decoder.

Bytes 3 and 4 indicate whether the following field scan (where appropriate) is in its normal form or whether it is in inverted form and therefore needs processing before display. Unit 1 produces a random encrypted sequence of inversion of the field scan so that a television programme transmitted along lines 2 cannot be satisfactorily displayed without decoding the field correction byte. Each byte contains a predetermined number (usually 4) of information bits, such that the majority state of the individual bits determines the state of the byte, "0" representing a normal field and "1" an inverted field. There can also be optional encryption of the sound signal associated with the video field scan by chopping in synchronisation with the video field scan inversion or by changing the DC level during inversion or both.

Bytes 5 to 9 represent a code for the particular subscriber of television receiver 4 and would be used when the command signal was to be sent to that particular subscriber. A "0" in all the bits of these bytes would address all subscribers, but any number other than zero would only address that particular subscriber. Uses for this feature include: down-line programming of charge code levels, polling which subscribers are watching a particular programme (enabling assessment of the numbers and identities of viewers) or reading a meter.

Unit 1 uses bytes 10 to 14 to ask the decoder a specific detailed question such that the reply signal which is returned to the unit 1 can be in the form "yes" or "no", indicated by the existence, or not, of a single pulse. Such questions may ask whether the button of keyboard 5 (see Figure 1) is presently depressed, whether the first (and then second etc.) binary digit of the gas meter reading is "1" at present, whether the decoder has received the command signal or whether the subscriber code is a given number.

In an alternative method of reading a meter, a frequency of reply pulse is assigned to each digit from 0 to 9 (i.e. f0 correspond to 0, f to 1 etc) and then a composite reply signal of the relevant frequency is sent back to unit 1; thus, for a meter reading of 349, a composite reply signal formed by a pulse of frequency f3, then f4, then f9 would be sent to unit 1.

Unit 1 uses bytes 15 and 16 to specify what frequency or frequencies the reply pulse or pulses should have. The reply pulses are generated by an IC in the receiver 4 and controlled by the decoder, the IC using the 6M Hz oscillator in the teletext decoder as the reference source to provide a 5.86 KHz spacing in each of 60 possible frequencies over the range 8.0 to 10.2 MHz. The output level of a pulse is about +51 dB mV RMS with a duration of 4 line periods, the pulse space being at least 4 line periods to allow for signal decay. A raised cosine pulse is used to minimise interaction with adjacent channels; frequency spacing and modulation are chosen so that a zero occurs in the spectrum at the adjacent carriers to give a minimum in cross-talk.

The time staggering of the channels helps to distinguish the sources of all the reply signals. Thus the unit is able to determine that any pulse received at a given time and of a given frequency must be a positive reply to a particular question, the absence of such a signal at that time indicating a negative reply to that question.

Bytes 17 and 18 contain information for down-line programming the charge code to a specific receiver.

Byte 19 includes information suitable to over-ride the Data Entry Window (DEW) which normally locks out picture information during broadcast transmissions, thereby allowing full field teletext transmission generated by unit 1. With the facilities described above, such teletext programmes could involve interactive learning.

There remains an additional 13 bytes in the second part of the command signal for which additional functions can be assigned. For example the command signals can incorporate further codes which act as security measures to ensure highly confidential information is only received at specific television receivers.

Each of the bytes includes single Hamming protection.

The receiver 4 may include an information store, so that unit 1 can command the decoder to hold information (e.g. a meter reading) in the store for subsequent retrieval and relay to unit 1 upon a further command signal at a later time. This facility may also be particularly useful when ordering goods seen in television advertisements or in teletext 'pages'. The receiver may include an indicator to show when the order has been relayed to unit 1.

Unit 1 may provide a 'local' version of the teletext information magazine as a complement or an alternative to the nationally broadcast teletext magazine. The locally generated teletext pages from unit 1 are synchronised from a master generator but with the field sync pulses phase-shifted to allow the reply signals to be time-multiplexed. A microcomputer at unit 1 controls the interleaving of the command signals and reply signals.

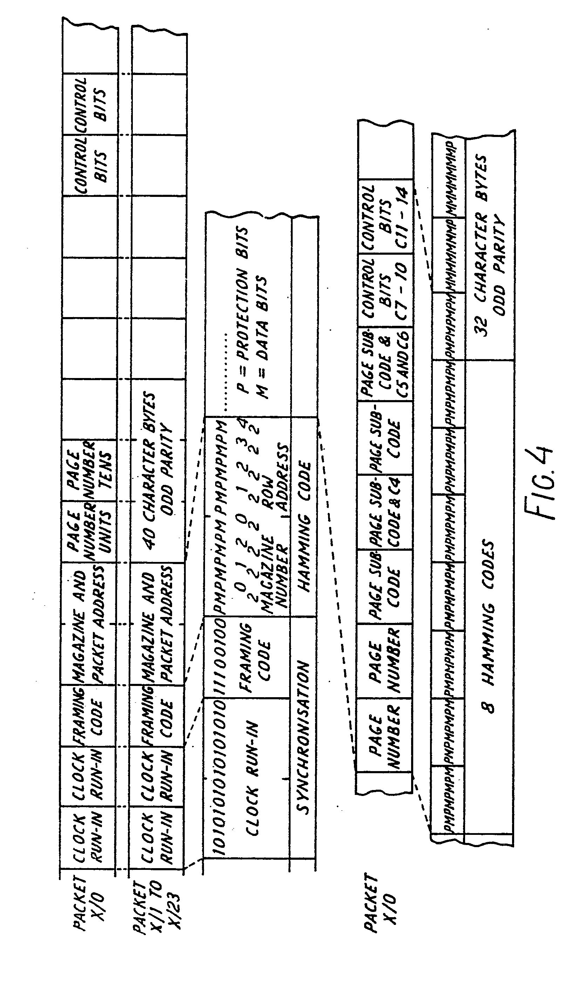

Figures 4 to 11 illustrate aspects of another cable network embodying the present invention.

The network uses teletext coded signals to carry command information from the cable control unit (hereafter known as "Control") to each subscriber. The return channel from the subscriber is generated in a cable system adaptor of the television receiver and occupies a band between 6 and 10 MHz. The signal returned along this channel can be a single burst or can be PSK modulation.

A valid command signal is indicated on the page header (packet X0) by a page sub code in bytes 8 to 11

4

**0 103 438**

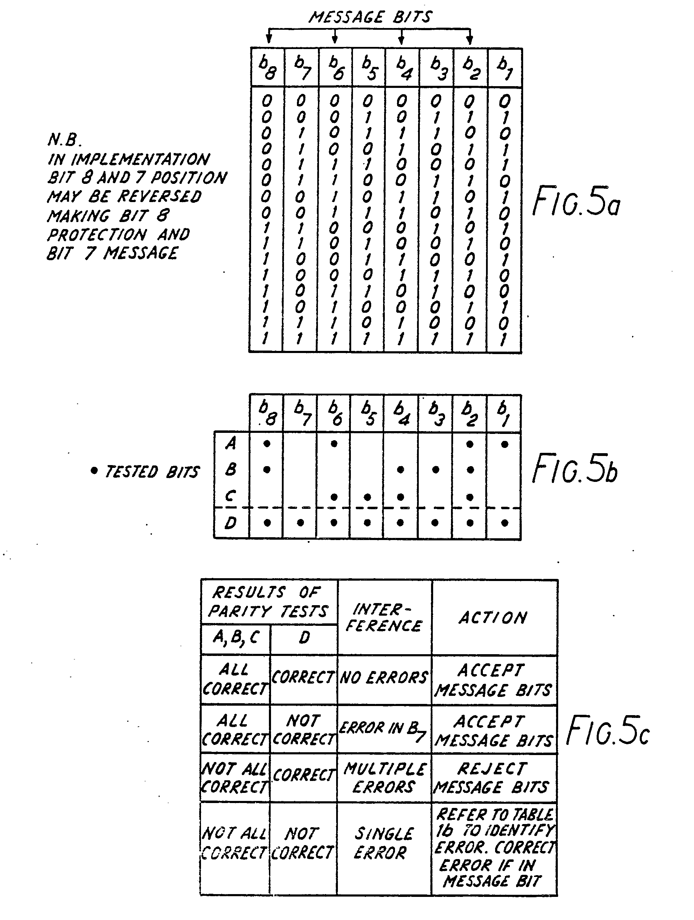

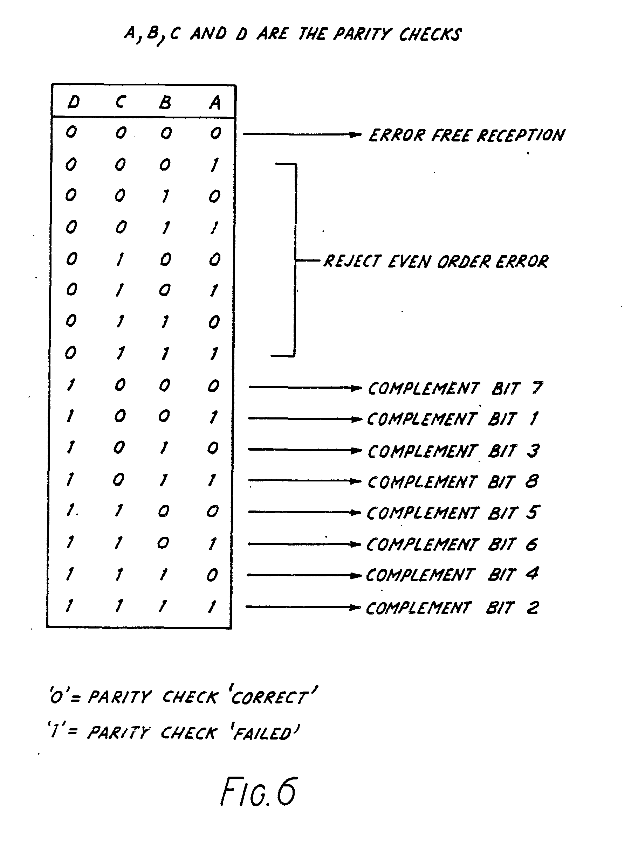

(see Figure 4), with coding that is nationally agreed (i.e. not to be used for other purposes in off air broadcasting). Bytes 1 to 7, 12 and 13 and control bits C4, C5 and C6 are used for the same purposes as a broadcast or Local teletext packet X0. The remaining 32 bytes of packet X0 carry command signal information protected by single bit hamming protection (see Figures 5 and 6), thereby giving 128 message bits arranged as two command signals each of 64 bits. The two Insertion Test Signals (ITS) lines are used for the broadcast channels being distributed. After using one ITS line for a command signal, a locally re-inserted standard packet X0 is needed in the next line in order to return the cable receiver to broadcast mode; this makes the network transparent to broadcast teletext for all normal receivers. Thus, the network has two command signals per field for broadcast channels.

For locally generated channels, where all 16 teletext lines are available if required, one magazine would be used exclusively for command signals. In this case a page header gives the escape into the "command signal mode" followed by normal rows of the same magazine for further command signal lines. It is then not necessary to use another header to return to the original magazine. Up to 32 command signals per field would be possible for locally generated channels. The number of command signals per field would decrease in accordance with the number of lines used for local teletext.

Each command signal contains two groups of data, the first group includes a subscriber number associated with an individual adaptor and may be to a national standard to allow interlinking of separate networks, or the national standard address format could be transposed to decimal format by the central control unit if necessary. The second data group includes information and instructions to a computer controlling the various functions in the adaptor. Table 1 shows the allocation of function addresses in a non-volatile RAM memory, organised in 256×8 bit words and able to cater for different functions; this provides a flexible arrangement allowing for future expansion of facilities operable by the network.

TABLE 1

| FUNCTION ADDRESS | FUNCTION (BYTE) | FUNCTION ADDRESS | FUNCTION (BYTE) |
|---|---|---|---|
| 0 | USER (IDENTITY) | | |
| 1 | NUMBER | ETC | METER READINGS |
| 2 | NETWORK | | (ELECTRICITY) |
| 3 | NUMBER | | " |
| ETC | P.I.N. NUMBER | | |
| | TRANSACTION NUMBER | | METER READINGS (GAS) |
| | SCRAMBLE LEVEL | | " |
| | PAY PER VIEW | | TV/VCR ON-OFF |
| | CHANNEL TUNED TO | | NETWORK NUMBER (CHECK) |
| | ALARM STATUS | | |
| | IFC REQUEST | | SHOPPING MESSAGES " |
| | FIRE ALARMS " | | " |
| " | " " | | MAG NUMBER PAGE NUMBER |
| | SECURITY ALARMS " " " " | | ENCRYPT KEY WORD |
| | AUDIENCE RESPONSE | | GO TO PAGE STORE ETC. |

The function address is defined by 9 bits. The first most significant 8 bits giving the 1 of 256 location, the least significant bit defining which nibble is being addressed.

An adaptor is alert to all command signals directed through the channel to which it is tuned, until it recognises a command signal applicable to that adaptor; it then ignores all subsequent command signals until the necessary action has been completed.

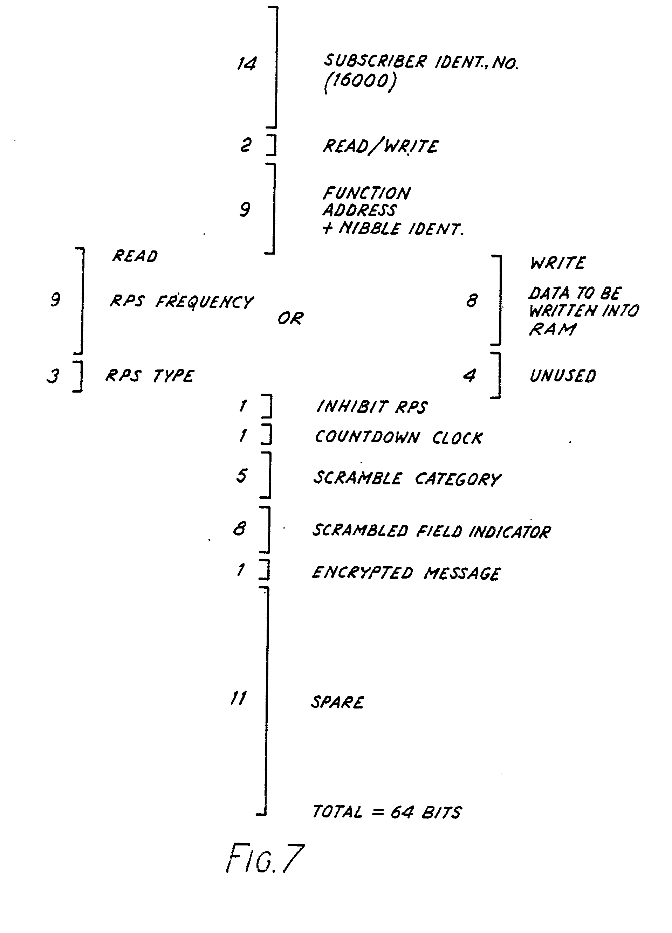

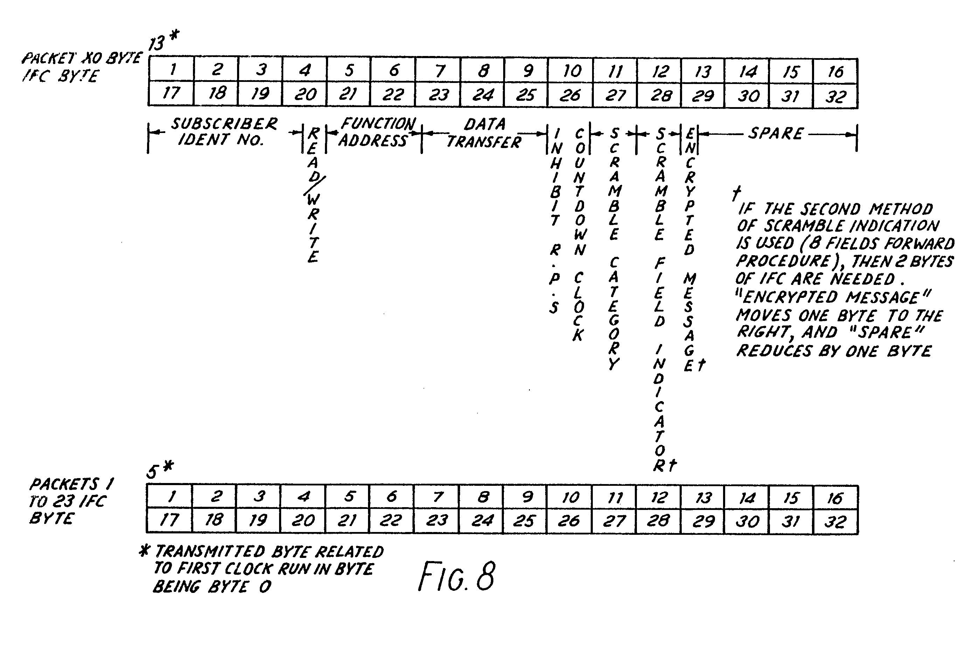

The allocation of bits in a command signal is shown on Figures 7 and 8. Every cable subscriber can be uniquely addressed in accordance with a national standard, so that inter-network messages can be carried. A cable network head-end re-addresses messages if required, so that a command signal would only need to identify subscribers in a particular zone of the network. By limiting the address length in this way, more use can be made of the rest of the command signal packet. A maximum subscriberage of 16000 per zone (i.e. per trunk) is adequate.

The Subscriber Identity Number (SIN) is contained in the first 3.5 data bytes of a command signal, and consists of 14 message and 14 protection bits. Thus, when a command signal is received at an adaptor, a comparison is made between the SIN of the command signal and the SIN held in a permanent memory store (eg. a difmos or a battery-powered store) of the adaptor. The 14 data bits allows for 16000 users. An "0" in all bits would address all subscribers.

Upon installation of an adaptor into the network, the adaptor is commissioned by down-cable programming. The installer would have a number of transaction numbers issued. This 14 bit number would be entered into the adaptor by either a plug-in card or by local programming. The control centre would be contacted to confirm details, the adaptor would then have an internal programming switch thrown and would be down-cable programmed. The transaction number would be replaced by the customer's SIN.

A customer will be allocated to a physical network at installation. During commissioning a network number will be programmed into the cable adaptor and held in the appropriate function address.

After commissioning, the network number of users on a physical network can be read to confirm validity. With the physical network therefore confirmed, only the subscriber identity number if required in a command signal.

The network number will be checked periodically to identify customers joining the network accidentally or illegally from other networks. This would allow Control to take action to debar any alien receiver.

The network number is contained in two bytes, allowing for up to 65000 networks nationally, and will be related to the nationally agreed network number.

The read/write instruction enables information to be down loaded to or retrieved from the adaptor; by using 2 bits, an additional dropout immunity is permitted.

The read/write nibble contains 2 message and 2 protection bits. Of the two message bits, "00"=READ, "11"=WRITE, "01" and :10"=NO ACTION.

The following structure of a command-signal depends on the READ/WRITE command.

The Function Address bytes contain 9 message and 9 protection bits. The function address allows 8 bits for row addressing and 1 bit is used to identify either of the two 4 bit nibbles of the byte. Each function would have a dedicated row address in RAM. The 8 most significant bits contain the function row address. Another bit is used as a nibble pointer, such that "1"=UPPER NIBBLE and "0"=LOWER NIBBLE. The preceding READ command means read the content of the RAM address, while the preceding WRITE command means write into the RAM address the ensuing data.

The data transfer bytes contain 12 message and 12 protection bits for read or 8 message and 8 protection bits for write, the format of the message bits being dependent on which READ/WRITE instruction is used (see Figure 7).

Thus, for a READ instruction, the bits identify the frequency (of the lowest of a block of frequencies) to be used for the return signal, and the type of signal i.e. single AM pulse, PSK, etc.

Nine bits are used to control the synthesiser generating up to 512 return frequencies (of which only 400 are required).

Three bits specify the type of reply anticipated, up to 8 variations being provided, initially 3 codes have been allocated, namely: (Code 001) for Single Burst, whereby in response to items such as customer polling, a raised cosine burst of return carrier in the range 6—10 MHz is returned, timed from a point within the field sync period following the polling command and defined by the countdown algorithm; (Code 010) for PSK Response, for sending back data stream information such as network number, or for ordering information such as "Shopping at Home"; and (Code 100) for Sixteen Frequency Data Response, whereby the specified return frequency (N) points to the lowest in a block of 16.

In the "Sixteen Frequency Data Response" reply, the return signal is a burst of whatever frequency is appropriate in accordance with Table 2. This system can be used to code a decimal or hexa-decimal number.

TABLE 2

| Frequency | N | N+1 | N+2 | N+3 | N+4 | N+5 | N+6 | N+7 |
|---|---|---|---|---|---|---|---|---|
| Value | 0 | 1 | 2 | 3 | 4 | 5 | 6 | 7 |
| Frequency | N+8 | N+9 | N+10 | N+11 | N+12 | N+13 | N+14 | N+15 |
| Value | 8 | 9 | A | B | C | D | E | F |

For a WRITE instruction, 8 message bits give the data to be written into RAM; 4 message bits are unused. Confirmation of receipt could be by a following addressed "read" instruction.

After the difference in bit allocation in dependence on the instruction received, the remaining bits are of the "read and act" type and apply to all adaptors.

The "Inhibit RPS" bit is set to prevent a return signal being sent when required by the central control, for example in the case where an individual adaptor becomes jammed on in the return signal mode.

There is provision for pay-per-view, whereby a number down loaded into RAM would equate to a sum of money paid or contracted for. This would be decremented by a clock, transmitted by command signals. When at zero, authorisation would cease and an addressed message would be displayed.

The 5 bits 'scramble category' indicate which of 32 tiering levels is associated with the currently transmitted TV programme. This code is sent out to indicate what level is necessary to watch the programme being sent. In the cable adaptor the programme scrambling level is compared to the subscriber level and the decision is made whether to unscramble or not. If the parameters indicate that the customer's scrambling level allows access to the programme being shown, the scramble field indicator is used in the receiver to unscramble the programme.

The scrambled field indicator provides a method for the transmission of de-scrambling information, whereby data is transmitted during each field and acted upon for the next field (or perhaps next but one, dependent on data processing speed); this is known as the "field by field" method. Another method depends on down loading decoding data into RAM in 8 bit packets to be applied to 8 consecutive fields, starting at a defined future time (e.g. 8 fields on); this is known as the "preprogrammed method".

Field by Field Method requires part of the adaptor IFC processing capability to be used during every field. Thus 4 message bits are allocated, to indicate whether the picture and sound of the TV programme is encrypted during the next (or next but one) field. The four bits are all the same (e.g. all "1"s means encrypted field), allowing a majority decision to be taken for additional corruption protection.

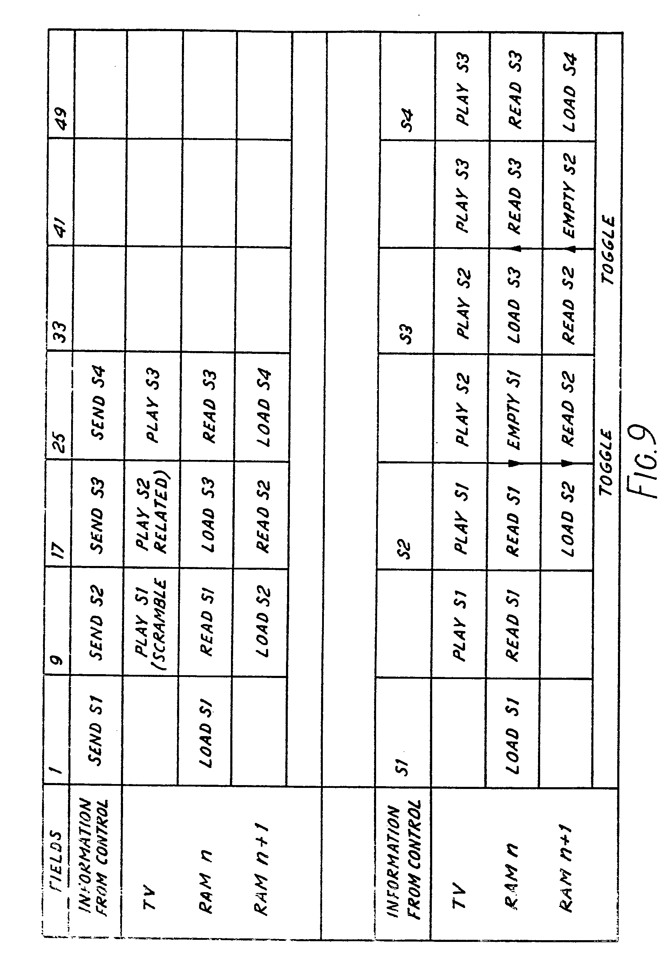

The Pre-Programmed Method requires adaptors to be adressed during only 1 field in 8 (or more). Thus 8 message bits indicate how picture and sound of the associated TV programme is encrypted during some following group of 8 fields (or 16 fields with a repeat option). The scramble indicator byte is written into RAM as a function, two RAM location being used sequentially. The processor toggles between the two locations (see Figure 9).

The first scramble byte (S1) of a newly scrambled programme indicates start of scrambling 8 fields ahead. It is sent out on field 1 and loaded into RAM location 'n'. Each bit of the scramble field byte indicates whether the picture and sound of a particular field is scrambled or not. A '0' indicates a normal field and a '1' would indicate that the field is scrambled related to a method previously down loaded.

On field 9 the next scramble indicator byte (S2) is sent out by control and loaded into RAM location 'n+1'. The TV transmission is scrambled during fields 9—16 in accordance with the scramble byte (S1), while the adaptor also reads S1 and used it to decode.

On field 17 scrambling information is taken from RAM location (n+1) and "information from Control" sends scrambling byte (S3) which is loaded into memory location 'n'. As shown in the lower half of Figure 9 a scramble byte could be used more than once, thus increasing the time between command signals with scramble information.

To give improved drop out immunity if desired the scramble field byte could be sent out more than once during the load phase so that if a Hamming check failed the receiver could reload the information. In this case 3 bits would be used to give a count down to the scrambling datum.

Information of value or confidential pages would be sent out with an unspecified number of bits inverted. The keyword bytes down loaded into the adaptor function table allow these bits to be re-inverted to give a meaningful display. Prior to the adaptor being able to make use of the keyword the customer must have paid for a transaction number or be a member of a closed user group and have the appropriate card entered into the cable adaptor. The 'Encrypted Message' bit indicates whether or not a down-loaded message is encrypted.

A poll can be sent out to identify customers requesting information value pages that are held in non-immediate store. The resulting spectrum would identify all subscribers wishing pages. Subscribers wishing to use the service will be sent a command signal down loading a transaction number and a return frequency. By PSK signalling the customer would send back just the page number required. The page would be placed in the page store encrypted related to the subscribers PIN number and the transaction number. The addressed receiver would then be able to unencrypt the information sent.

The spare bits will allow for modification during evolution.

Return Path Signalling (RPS) by means of short bursts of carrier frequency, appropriately modulated. The characteristics of the system are:—

a) Frequency spectrum—6 to 10 MHz.

b) Modulation method:—Either—single bursts of amplitude modulation (AM); Or—pulse trains of phase shift keyed (PSK) modulation, at a bit rate in the region of 2.4 K bit/second.

c) RPS channel bandwidth—10 KHz.

d) Number of RPS channels—up to 400

An RPS response is always prompted by the control unit by means of a command signal. All RPS frequency or frequency block allocations remain under software control.

For single bit responses, the carrier modulation takes the form of a raised cosine pulse of width 200 μS (amplitude to be defined). Allowing the decay time and propagation delays in a local cable system (e.g. for maximum length of 10 Km), the minimum allowable time between successive responses from any source is of the order of 500 μS.

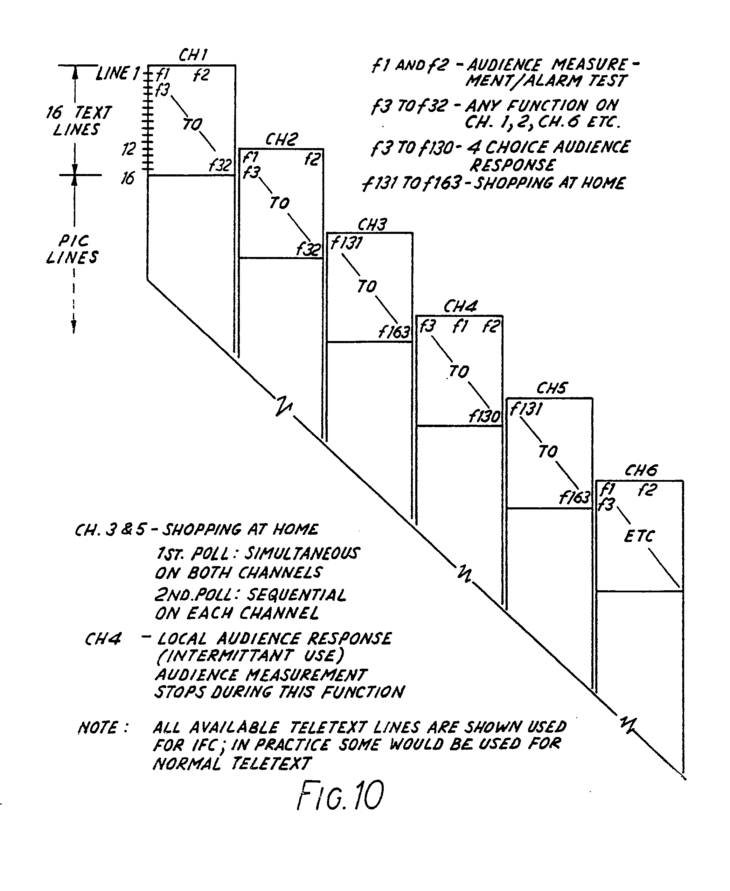

One method of timing or cueing the return signal uses software-defined frequency blocks and selected time slots to queue RPS responses such that they reach the control unit in an orderly and non-contentious sequence. It is called global polling, and is the method most widely used for single bit response. A valuable feature of this method is that the identity of each individual respondent can be recognised by Control. Details of the procedures are outlined in Figure 10.

Each adaptor in a network gives a one bit response to a particular IFC prompt by means of a burst of carrier at a defined frequency, transmitted within a defined time slot. There are periods of time related to an integral number of TV lines. The clock in the adaptor counts each line sync pulse starting from a chosen point in a particular field sync pulse. The start point is cued by command signal and one time slot is defined by the time for 8 T.V. lines (8×64 μS). This gives (very nearly 39 time slots per field.

The response frequency is one selected from a block of 16. Control defines the particular block of 16 to be used at any moment by transmitting a command signal containing the bit number of the lowest frequency in the block.

The adaptor identity number is stored in digital format, e.g. 14 bits.

Upon prompt by a command signal, the adaptor enters a sub-routine as follows:—

a) Read least significant 4 digitals of I.D.—this defines 1 of 16 RPS frequencies in the block.

b) Read remaining 10 digits of I.D.—this defines 1 of 1,024 time slots.

An adaptor responds with a burst of its carrier frequency at the time thus defined, by matching its count of time slots with its own remaining 10 digits of I.D.

For example, when used for a global poll, all adaptors of a 16,000 potential population network are prompted by an "all addresses" command signal to respond to a viewing poll. The response time would be:—

$$\frac{16,000}{16} \times 512 \ \mu S = 512 \ ms$$

Thus it takes a minimum of roughly 0.5 seconds to complete all RPS responses whether directed down a single programme channel or simultaneously down all channels. This timing takes no account of the data processing time required either in an adaptor or at the control unit. The limitation is assumed to be in the adaptor in terms of trade-off between processor system cost versus speed. For the purpose of illustrating response times of the network, the delay in the adaptor between the prompt and the start of the first RPS response is estimated in terms of the time for an integral number of TV fields. A large number is used—viz., 10 field periods (0.2 seconds). This gives a global poll response time at Control of 0.7 seconds. The responses can be analysed by time and frequency at the control unit to unravel individual adaptor identities.

Since many of the programmes carried on the network will be locally generated, their field can be synchronised but phase shifted. Figure 10 shows programmes each time-shifted by 12 lines. This allows single bit responses to be carried upstream using the same frequencies on consecutive programmes.

In general, the control unit polls all or section of a network population to identify the adaptors who wish to communicate a particular piece of information. The control unit then individually addresses each respondent for the data. The 30 channel cable system is split as follows:—

a) 10 off-air channels.

b) 14 general local Channels.

c) 6 special local Channels (e.g. Shopping at Home, full-field Teletext).

This split allows account to be taken of the different addressing speeds for each group viz:—

a) 2 command signals per field (one line)

b) 16 command signals per field (8 lines)

c) Up to 32 command signals per field (all 16 available lines).

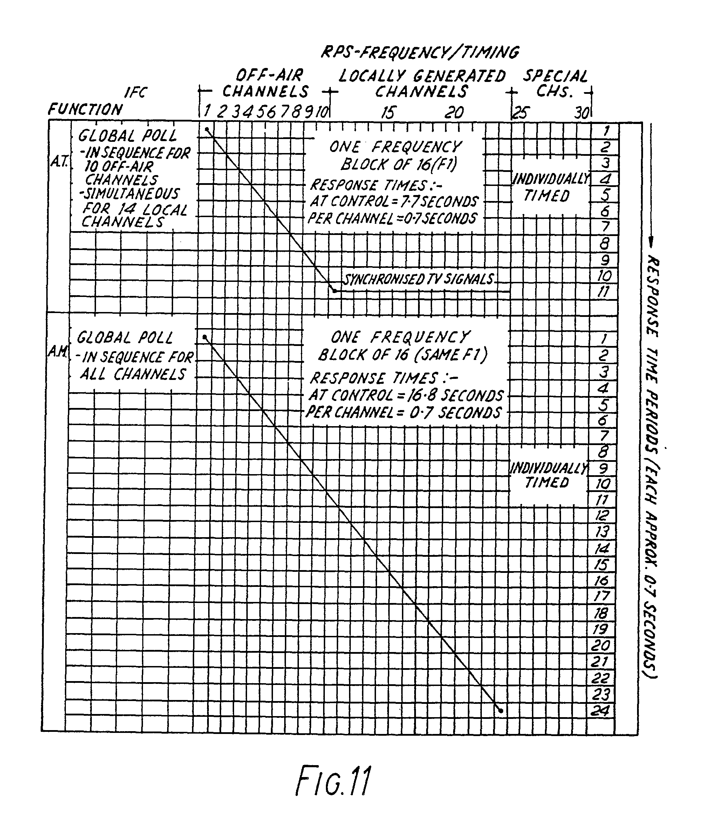

To do an alarm test by global poll, the control unit sends "all-identities" command signals routed and times as shown in Figure 11 and addressed to the ALARM STATUS function in RAM. A positive response

8

**0 103 438**

means "all alarm systems fitted are operational". No response could mean "no alarm fitted" or "one or more alarms not operational". Two alternative procedures could be adopted to resolve this; either the Control refers to a look-up table to determine which subscribers logged as having alarms fitted have not responded-in which case only these identities are individually addressed by Control for details, to be returned in data stream mode by reading from the relevant RAM address/es; or all adaptors could have an internal "alarm simulation" (eg link) provided which is removed when the adaptor is actually connected to a customer's alarm system.

In this case, Control prompts all no-response identities individually to send details, as above. Further "no-responses" to individually addressed command signals would be flagged by Control for special attention. (e.g. in the case where alarm simulation links are provided, repeated "no-responses" might mean the incoming cable has been cut, or mains power to the receiver is off, etc).

Activation of an alarm triggers the following events in an adaptor:—
a) Alarm details are entered in the appropriate alarm function address in RAM.
b) COMMAND SIGNAL REQUEST address in RAM is activated.
c) Adaptor is switched to a designated local channel, to wait for a prompt for COMMAND SIGNAL REQUEST.
d) The TV screen shows "Alarm raised", by an appropriate means.

The alarm details are subsequently transmitted to the control unit by the procedures described under "Message Sending", which includes acknowledgement by Control of receipt of message.

For audience measurement by global poll, Control sends "all-identities" command signals sequentially down each channel, times as shown in Figure 11. Adaptors are commanded to monitor the status of the "TV/VCR on-off" address in RAM, and respond if programme material is being used. Total response time is 24 Response Time Periods (16.8 seconds) for routine polls. Repetition rate would probably be fairly infrequent, say every 10—15 minutes, with the addition perhaps of snap polls at need. Channel time occupancy would be very low (eg. 0.7 seconds in 10 minutes).

The procedure for an audience response poll is:—

1. Global poll on the particular channel for choice 1,
2. Global poll on the particular channel for choice 2,
3. Global poll on the particular channel for choice 3, .etc. The response time would be (0.7×number of choices) seconds.

The feature of "Messages to Control" is only available on locally generated programme channels. The last command signal space in the 8 designated lines on one field is used to prompt a COMMON SIGNAL REQUEST response, sending to all addresses on all local channels simultaneously. If an individual receiver is busy at the time, having been addressed by the control unit in any of the prior 15 spaces or in previous fields, then this command signal prompt is ignored. This allows message prompting to be at a fast repetition rate, but an adaptor only responds when its processor is free.

The adaptor replies if the COMMAND SIGNAL REQUEST address status is active (ie. when a message resides in one or more of the allocated addresses).

For the Message Location Phase, the control unit analyses the global poll responses and queues them in an orderly identity-based fashion. It then addresses each respondent in batches of 16 per field, down all local channels simultaneously, allocating a response frequency (it has to remember the identity/frequency relation for future reference).

For the Message Sending Phase, Control again addresses the individual identities, this time directing the adaptor to send the message in data stream mode from the particular RAM location just supplied.

For the Message Acknowledgement Phase, further addressing cycle is necessary to indicate "message received by the control unit". This can trigger "wipe message location address clear" and also, for instance, "alarm received" indication on the TV screen.

Response Times are as follows:—
a) Global Poll=0.7 seconds (all respondents)
b) Message Location, for one batch of 16 adaptors=0.2 (10 field delay)+approx 0.005 (1 byte) seconds.
c) Message Sending, for one batch of 16 adaptors=0.2+ up to 0.03 (6 bytes, say) seconds.
d) Message Acknowledgement, for one batch of 16 adaptors=0.2 seconds (process delay before TV display). The full cycle for the first batch of 16 respondents would therefore probably take less than 1.5 seconds, allowing for some processing time at the control unit. Further batches of 16 per field could be processed sequentially during the 10 field delay times of the first batch, perhaps using the same RPS frequencies with careful time management, but more easily using different frequencies. For the "Shopping At Home" feature, the Channels used are dedicated to Shopping, which could include full-field Teletext, and are not included in the routine polls applied to other channels. The Shopping procedure starts with a global poll to establish the identities of adaptors with orders waiting COMMAND SIGNAL REQUEST byte, establishing the RAM location of the message (in this case, the shopping list, which may reside in a special page store). A further address cycle extracts the data, followed by an acknowledgement cycle which cues the TV screen to display "order received".

9

Each shopping list contains the following data sections:—

a) Personal Identity Number (PIN)—for credit worthiness check, personal authority for order, etc; b) Up to 48 list items (2 columns of 24 lines on a text page). Each item is allocated say 5 characters for reference number and 2 characters for quantity=bytes; c) The data closes with Cyclic Redundancy Check (CRC) digits.

If the CRC check at the control unit reveals a transmission error, the subscriber is moved down the waiting list, to be interrogated again.

Thus up to roughly 340 bytes of shopping data can be transmitted in one order, taking approximately 1.5 seconds at a data stream of 2.4 K bits/second (allowing for start/stop/space bits etc.). Since 16 identities are addressed in one TV field, the control unit would wait for up to 1.7 seconds for all 16 orders to be completed (0.2 seconds processing time at the adaptors).

The total response time would be:— a) Global Poll=0.7 seconds; b) Location Poll (16)=0.2+0.005 seconds; c) Shopping Lists (16)=0.2+1.5=1.7 seconds; d) Acknowledgement=0.2 seconds. Thus the total time to service the first 16 orders would be in the region of 2.8 seconds. Subsequent batches of 16 would take 2.1 seconds (already global polled).

These could be shortened if the control unit can manage the re-allocation of frequencies to waiting customers as soon as orders are completed.

Two major types of shopping are available differing in their demands on RPS capacity. These are shopping from Teletext pages, which might be expected to produce long lists, but probably fair evenly spaced out in real time, and shopping from video advertisements, which probably produce brief lists, but many customers will wish to order in a short time period.

Thus a poll may be expected to catch a few long orders plus many short orders (when video advertising is being broadcast). This emphasizes the need for the control unit to re-allocate frequencies to waiting customers as soon as possible. .

Since item references can be alpha-numeric, customers would either need a full keyboard or other means must be used. A cursor/pointer facility is provided in the adaptor, controlled from the remote control transmitter. After pointing to the item reference number, a button push would transfer the characters to RAM. This method would be directly applicable to Teletext pages. For video advertisements, customers would need to be asked to switch to a Teletext page to order, or the item references could be numeral only, and entered from the remote control keypad.

Betting can be treated in the same manner as the "Shopping at Home" facility. However, in order to formalise the "Betting List" it would be convenient if a betting facility was offered via Teletext pages. Each Meeting/Time/Runner could be coded for identification, and a bet item would consist of this code a number of money units, and code characters defining the type of bet.

An interactivity can be provided readily during Out-of-Programme Hours. Since there is no programme signal a TV pattern generator is used to supply the syncs for time slot count-down. This can make all channels synchronous and global polls can be conducted simultaneously down all channels when desired. Previous off-air channels become local channels in terms of command signal capacity per TV field.

The functions routinely addressed include:—

Adaptor identify/Channel Location; Alarm Test; Meter Reading; Network Number Check; Command Signal Request.

In the Adaptor identity channel location function, a global poll is carried out, Channel by Channel, to establish which identities are located on which channel. This requires a "SEND IDENTITY" function in RAM, distinct from the Audience Measurement function "TV/VRC ON". The identity/location map is stored by the control unit for future reference.

The alarm test is carried out in the normal way, simultaneously down all channels.

In the meter reading function, a global poll down all channels simultaneously establishes the identities of adaptors with meter readings waiting to be read (COMMAND SIGNAL REQUEST active-Meter location pointer). Interrogation of individual identities in batches of 16 down each channel in sequence follows, having used the identity/Channel location map.

A meter reading is stored in nibbles, each 4 bit nibble being the binary coded decimal equivalent of one decimal number in the meter reading. A reading of 4 bytes, say, can be transmitted in less than 15 milli-seconds but the total response time has to include the adaptor data processing delay. Assuming a batch of 16 adaptors completes a meter reading procedure in less than 0.25 seconds, a poll of a total population of 16000 for one meter reading can be completed in under 5 minutes. Interrogation of other meter addresses follows in sequential cycles.

For a network number check, two "all addresses" command signals are sufficient to down-load the network number into a location each adaptor's RAM, for comparison with the network number already stored. A further global poll command signal prompts a response if a difference is detected.

Additional detective work by the control unit can isolate an alien adaptor, and corrective action taken to exclude it from the network.

Many of the network functions are organised to be carried out sequentially, mainly to avoid contention on the return path. As a result, the number of frequencies used can be limited. A suggested set of allocations is outlined in Table 3.

TABLE 3

| FUNCTION | F BLOCK | COMMENT |
|---|---|---|
| 1.1 Alarm Test | F1 | |
| —follow up | individual f | Transitory f re-usable |
| 1.2 Alarm raised | | See Messages |
| 2. Audience Measurement | F1 | |
| 3. Audience Response | F1 | |
| 4. Messages to Control | | |
| —IFC REQUEST | F1 | may use F3, F4 etc. |
| —Message location | F2 (16×f) | if interleaving |
| —Message Sending | F2 (16×f) | |
| 5. Shopping at Home | | |
| —IFC REQUEST | F11 | Another F block, and |
| —Message location | Fn(16×f) | another (16×f) block |
| —Message sending | Fn(16×f) | to avoid conflict with the general local Channels. May use Fn+1, Fn+2, etc. |
| 6. Betting | | As Shopping, But may need further F blocks, depending on total traffic. |
| 7. Interactivity at Night, etc | | Probably can be limited to F1 and F2, plus a few f. |

The proposed return signed system can use up to 400 individual frequencies, e.g. up to 25 blocks of 16 if necessary. Using F to denote a block of 16 frequencies, and f for individual frequencies, for a global poll, always use F1 with a reserve block F(R) allocated in case of emergency; on the special Channels, use, for example, F11.

Either of the two cable networks described above can be modified such that any return signals transmitted from the television receiver towards a central control unit are command signals in teletext format.

Either of the cable systems described above can be linked with a system in which video signals are broadcast (e.g. by satellite).

**Claims**

1. A cable television distribution network comprising means (1) to send command signals in teletext format along a transmission line (2) to a television receiver (4), whereby, in use, said command signals initiate automatic operation of selectively the receiver (4) or a remote device (5, 6, 7), via said receiver, in accordance with said command signals, means, in said receiver, to effect an operation or operations in accordance with said command signals and means, in said receiver, to effect a reply in accordance with said command signals.

2. A network according to Claim 1, wherein the command signals are arranged to perform interrogations on the television receiver (4) concerning a specific subject, and the reply-effecting means is capable of producing an appropriate response to said interrogations.

3. A network according to Claim 1 or Claim 2, wherein the reply-effecting means of a television receiver (4) comprises a pulse generator operable to produce a pulse to signify an affirmative response to interrogations effected by the command signals, the pulse being for return along the transmission line (2) towards the source (1) of the command signals.

4. A network according to any one of Claims 1 to 3, wherein the reply-effecting means of a television receiver (4) comprises a pulse generator operable to produce a pulse of any one of a number of frequencies, each value of frequency representing a particular response to interrogations effected by the command signals, the pulse being for return along the transmission line (2) towards the source (1) of the command signals.

**0 103 438**

5. A network according to any one of Claims 1 to 4, wherein the signal sent by the reply-effecting means towards the source (1) of the command signals is in teletext format.

6. A network according to any of Claims 1 to 5, further comprising means to address at least one command signal to one or more television receivers (4).

7. A television receiver for use with a cable television distribution network, the receiver (4) having means to identify command signals in teletext format which, in use, are sent along a transmission line (2) to the receiver (4), means to effect an operation or operations of selectively the receiver (4) or a remote device (5, 6, 7), via said receiver, in accordance with said command signals, and means to effect a reply in accordance with said command signals.

8. A television receiver according to Claim 7, wherein the reply-effecting means comprises a pulse generator operable to produce a pulse to signify an affirmative response to interrogations effected by the command signals, the pulse being for return along the transmission line (2) towards the source (1) of the command signals.

9. A television receiver according to Claim 7 or Claim 8, wherein the reply-effecting means comprises a pulse generator operable to produce a pulse of any one of a number of frequencies, each value of frequency representing a particular response to interrogations effected by the command signals, the pulse being for return along the transmission line (2) towards the source (1) of the command signals.

## Patentansprüche

1. Kabelfernseh-Verteilungsnetzwerk, enthaltend Mittel (1), um Befehlssignale in Teletextformat entlang einer Übertragungsleitung (2) zu einem Fernseh-Empfänger (4) zu senden, wobei bei der Benutzung die Befehlssignale wahlweise den automatischen Betrieb des Empfängers (4) oder einer entfernten Vorrichtung (5, 6, 7) über den Empfänger in Übereinstimmung mit den Befehlssignalen auslösen, Mittel in dem Empfänger, um eine Wirkung oder Wirkungen in Übereinstimmung mit den Befehlssignalen zu verursachen, und Mittel in dem Empfänger, um eine Antwort in Übereinstimmung mit den Befehlssignalen zu bewirken.

2. Netzwerk nach Anspruch 1, bei dem die Befehlssignale so aufgebaut sind, daß sie einen spezifischen Gegenstand betreffende Anfragen an den Fernseh-Empfänger (4) richten, und wobei die eine Antwort bewirkenden Mittel in der Lage sind, eine geeignete Antwort auf die Anfragen zu erzeugen.

3. Netzwerk nach Anspruch 1 oder 2, bei dem die eine Antwort bewirkenden Mittel eines Fernseh-Empfängers (4) einen Impulsgenerator enthalten, der einen Impuls erzeugen kann, der eine bejahende Antwort auf von den Befehlssignalen bewirkte Anfragen bedeutet, wobei der Impuls zur Rückkehr entlang der Übertragungsleitung (2) zur Quelle (1) der Befehlssignale bestimmt ist.

4. Netzwerk nach einem der Ansprüche 1 bis 3, bei dem die eine Antwort bewirkenden Mittel eines Fernseh-Empfängers (4) einen Impulsgenerator enthalten, der einen Impuls mit irgendeiner Frequenz aus einer Anzahl von Frequenzen erzeugen kann, wobei jeder Frequenzwert eine bestimmte Antwort auf von den Befehlssignalen bewirkte Anfragen darstellt, und wobei der Impuls zur Rückkehr entlang der Übertragungsleitung (2) zur Quelle (1) der Befehlssignale bestimmt ist.

5. Netzwerk nach einem der Ansprüche 1 bis 4, bei denen das Signal, das von den eine Antwort bewirkenden Mitteln zur Quelle (1) der Befehlssignale gesendet wird, im Teletext-Format ist.

6. Netzwerk nach einem der Ansprüche 1 bis 5, das ferner Mittel enthält, um wenigstens ein Befehlssignal an einen oder mehrere Fernseh-Empfänger (4) zu adressieren.

7. Fernseh-Empfänger zur Verwendung mit einem Kabelfernseh-Verteilungsnetzwerk, wobei der Empfänger (4) Mittel aufweist, um Befehlssignale in Teletext-Format zu identifizieren, die im Betrieb entlang einer Übertragungsleitung (2) zu dem Empfänger (4) gesendet werden, Mittel um eine Wirkung oder Wirkungen wahlweise des Empfängers (4) oder einer entfernten Vorrichtung (5, 6, 7) über den Empfänger in Übereinstimmung mit den Befehlssignalen zu verursachen, und Mittel, um eine Antwort in Übereinstimmung mit den Befehlssignalen zu bewirken.

8. Fernseh-Empfänger nach Anspruch 7, bei dem die eine Antwort bewirkenden Mittel einen Impulsgenerator enthalten, der einen Impuls erzeugen kann, der eine bejahende Antwort auf von den Befehlssignalen bewirkte Anfragen bedeutet, wobei der Impuls zur Rückkehr entlang der Übertragungsleitung (2) zur Quelle (1) der Befehlssignale bestimmt ist.

9. Fernseh-Empfänger nach Anspruch 7 oder 8, bei dem die eine Antwort bewirkenden Mittel einen Impulsgenerator enthalten, der einen Impuls mit irgendeiner Frequenz aus einer Anzahl von Frequenzen erzeugen kann, wobei jeder Frequenzwert eine bestimmte Antwort auf von den Befehlssignalen bewirkte Anfragen darstellt, und wobei der Impuls zur Rückkehr entlang der Übertragungsleitung (2) zur Quelle (1) der Befehlssignale bestimmt ist.

## Revendications

1. Réseau de distribution de télévision par câble, comprenant des moyens (1) servant à envoyer des signaux de commande sous le format télétexte par l'intermédiaire d'une ligne de transmission (2) à un récepteur de télévision (4), ce qui a pour effet que, en cours d'utilisation, lesdits signaux de commande déclenchent le fonctionnement automatique au choix du récepteur (4) ou d'un dispositif à distance (5, 6, 4),

12

par l'intermédiaire dudit récepteur, conformément auxdits signaux de commande, et comportant des moyens situés dans ledit récepteur et servant à réaliser une ou des opérations conformément auxdits signaux de commande, et des moyens situés dans ledit récepteur servant à fournir une réponse conformément auxdits signaux de commande.

2. Réseau selon la revendication 1, dans lequel les signaux de commande sont agencés de manière à réaliser des interrogations dans le récepteur de télévision (15) en ce qui concerne un sujet spécifique, et les moyens de réponse sont aptes à produire une réponse appropriée auxdites interrogations.

3. Réseau selon la revendication 1 ou 2, dans lequel les moyens de réponse d'un récepteur de télévision (4) comprennent un générateur d'impulsions apte à produire une impulsion servant à signifier une réponse affirmative à des interrogations posées par les signaux de commande, l'impulsion étant destinée à revenir par l'intermédiaire de la ligne de transmission (2) en direction de la source (1) des signaux de commande.

4. Réseau selon l'une quelconque des revendications 1 à 3, dans lequel les moyens de réponse d'un récepteur de télévision (4) comprennent un générateur d'impulsions pouvant être actionné de manière à produire une impulsion présentant une fréquence quelconque parmi un nombre de fréquences, chaque valeur de fréquence représentant une valeur particulière à des interrogations posées par les signaux de commande, l'impulsion étant destinée à revenir par l'intermédiaire de la ligne de transmission (2) en direction de la source (1) des signaux de commande.

5. Réseau selon l'une quelconque des revendications 1 à 4, dans lequel le signal envoyé par les moyens de réponse en direction de la source (1) des signaux de commande possède le format télétexte.

6. Réseau selon l'une quelconque des revendications 1 à 5, comprenant en outre des moyens pour envoyer au moins un signal de commande à un ou plusieurs récepteurs de télévision (4).

7. Récepteur de télévision destiné à être utilisé avec un réseau de distribution de télévision par câble, le récepteur (4) comportant des moyens pour identifier les signaux de commande présents sous le format télétexte et qui, en cours d'utilisation, sont envoyés par l'intermédiaire d'une ligne de transmission (2) au récepteur (4), et des moyens pour déclencher une ou des opérations au choix du récepteur (4) ou d'un dispositif à distance (5, 6, 7), par l'intermédiaire dudit récepteur, conformément auxdits signaux de commande, et des moyens pour transmettre une réponse conformément auxdits signaux de commande.

8. Récepteur de télévision selon la revendication 7, dans lequel les moyens de réponse comprennent un générateur d'impulsions pouvant être actionné de manière à produire une impulsion destinée à signifier une réponse affirmative à des interrogations posées par les signaux de commande, l'impulsion étant destinée à être renvoyée par l'intermédiaire de la ligne de transmission (2) en direction de la source (1) des signaux de commande.

9. Récepteur de télévision selon la revendication 7 ou 8, dans lequel les moyens de réponse comprennent un générateur d'impulsions pouvant être actionné de manière à produire une impulsion possédant une fréquence quelconque parmi un nombre de fréquences, chaque valeur de fréquence représentant une réponse particulière à des interrogations posées par les signaux de commande, l'impulsion étant destinée à être renvoyée par l'intermédiaire de la ligne de transmission (2) en direction de la source (1) des signaux de commande.

FIG.1

| CLOCK RUN-IN | FRAMING CODE | MAGAZINE AND ROW ADDRESS | PAGE No. | SUB PAGE CODE | DISPLAY CONTROL | MESSAGE TEXT |
|---|---|---|---|---|---|---|

BYTE No.; 1  2  3  4  5  6  7  8  9  10  11  12  13  14  45

FIG.2

| CHARGE CODE | NETWORK CODE | FIELD CORR-ECTION | SUBSCRIBER CODE | RETURN SIGNAL COMMAND | RETURN FREQUENCY COMMAND | DOWN-LINE PROGR-AMMING FOR CHARGE CODE | D.E.W. OVER-RIDE |
|---|---|---|---|---|---|---|---|

1  2  3  4  5  6  7  8  9  10  11  12  13  14  15  16  17  18  19

FIG.3

0 103 438

0 103 438

| PACKET X/0 | CLOCK RUN-IN | CLOCK RUN-IN | FRAMING CODE | MAGAZINE AND PACKET ADDRESS | PAGE NUMBER UNITS | PAGE NUMBER TENS | | | | | CONTROL BITS | CONTROL BITS | |
|---|---|---|---|---|---|---|---|---|---|---|---|---|---|

| PACKET X/1 TO X/23 | CLOCK RUN-IN | CLOCK RUN-IN | FRAMING CODE | MAGAZINE AND PACKET ADDRESS | 40 CHARACTER BYTES ODD PARITY | | | | | | | | |
|---|---|---|---|---|---|---|---|---|---|---|---|---|---|

| 1010101010101010 | 1100100 | PMPMPMPM PMPMPMPM | .............. |
|---|---|---|---|
| CLOCK RUN-IN | FRAMING CODE | 2⁰ 2¹ 2² 2⁰ 2¹ 2² 2³ 2⁴ MAGAZINE ROW NUMBER ADDRESS | P = PROTECTION BITS M = DATA BITS |
| SYNCHRONISATION | HAMMING CODE | | |

| PACKET X/0 | | PAGE NUMBER | PAGE NUMBER | PAGE SUB-CODE | PAGE SUB-CODE & C4 | PAGE SUB-CODE | PAGE SUB-CODE & C5 AND C6 | CONTROL BITS C7 - 10 | CONTROL BITS C11 - 14 | |
|---|---|---|---|---|---|---|---|---|---|---|

| PMPMPMPM | PMPMPMPM | PMPMPMPM | PMPMPMPM | PMPMPMPM | PMPMPMPM | PMPMPMPM | PMPMPMPM | MMMMMMMP | MMMMMMMP |
|---|---|---|---|---|---|---|---|---|---|
| 8 HAMMING CODES | | | | | | | | 32 CHARACTER BYTES ODD PARITY | |

FIG.4

MESSAGE BITS

| $b_8$ | $b_7$ | $b_6$ | $b_5$ | $b_4$ | $b_3$ | $b_2$ | $b_1$ |
|---|---|---|---|---|---|---|---|
| 0 | 0 | 0 | 0 | 0 | 0 | 0 | 0 |
| 0 | 0 | 0 | 1 | 0 | 1 | 1 | 1 |
| 0 | 1 | 0 | 1 | 1 | 1 | 0 | 0 |
| 0 | 1 | 0 | 0 | 1 | 0 | 1 | 1 |
| 0 | 1 | 1 | 1 | 0 | 0 | 1 | 1 |
| 0 | 1 | 1 | 0 | 0 | 1 | 0 | 0 |
| 0 | 0 | 1 | 0 | 1 | 1 | 0 | 1 |
| 0 | 0 | 1 | 1 | 1 | 0 | 1 | 0 |
| 1 | 1 | 0 | 0 | 0 | 1 | 0 | 0 |
| 1 | 1 | 0 | 1 | 0 | 0 | 1 | 1 |
| 1 | 0 | 0 | 1 | 1 | 0 | 1 | 1 |
| 1 | 0 | 0 | 0 | 1 | 1 | 0 | 0 |
| 1 | 0 | 1 | 1 | 0 | 1 | 1 | 0 |
| 1 | 0 | 1 | 0 | 0 | 0 | 0 | 1 |
| 1 | 1 | 1 | 0 | 1 | 0 | 0 | 0 |
| 1 | 1 | 1 | 1 | 1 | 1 | 1 | 1 |

N.B.
IN IMPLEMENTATION
BIT 8 AND 7 POSITION
MAY BE REVERSED
MAKING BIT 8
PROTECTION AND
BIT 7 MESSAGE

FIG.5a

| | $b_8$ | $b_7$ | $b_6$ | $b_5$ | $b_4$ | $b_3$ | $b_2$ | $b_1$ |
|---|---|---|---|---|---|---|---|---|
| A | • | | • | | | | • | • |
| B | • | | | | • | • | • | |
| C | | | • | • | • | | • | |
| D | • | • | • | • | • | • | • | • |

• TESTED BITS

FIG.5b

| RESULTS OF PARITY TESTS | | INTER-FERENCE | ACTION |
|---|---|---|---|
| A, B, C | D | | |
| ALL CORRECT | CORRECT | NO ERRORS | ACCEPT MESSAGE BITS |
| ALL CORRECT | NOT CORRECT | ERROR IN $B_7$ | ACCEPT MESSAGE BITS |
| NOT ALL CORRECT | CORRECT | MULTIPLE ERRORS | REJECT MESSAGE BITS |
| NOT ALL CORRECT | NOT CORRECT | SINGLE ERROR | REFER TO TABLE 1b TO IDENTIFY ERROR. CORRECT ERROR IF IN MESSAGE BIT |

FIG.5c

A, B, C AND D ARE THE PARITY CHECKS

| D | C | B | A |
|---|---|---|---|
| 0 | 0 | 0 | 0 |
| 0 | 0 | 0 | 1 |
| 0 | 0 | 1 | 0 |
| 0 | 0 | 1 | 1 |
| 0 | 1 | 0 | 0 |
| 0 | 1 | 0 | 1 |
| 0 | 1 | 1 | 0 |
| 0 | 1 | 1 | 1 |
| 1 | 0 | 0 | 0 |
| 1 | 0 | 0 | 1 |
| 1 | 0 | 1 | 0 |
| 1 | 0 | 1 | 1 |
| 1. | 1 | 0 | 0 |
| 1 | 1 | 0 | 1 |
| 1 | 1 | 1 | 0 |
| 1 | 1 | 1 | 1 |

→ ERROR FREE RECEPTION

— REJECT EVEN ORDER ERROR

→ COMPLEMENT BIT 7
→ COMPLEMENT BIT 1
→ COMPLEMENT BIT 3
→ COMPLEMENT BIT 8
→ COMPLEMENT BIT 5
→ COMPLEMENT BIT 6
→ COMPLEMENT BIT 4
→ COMPLEMENT BIT 2

'0'= PARITY CHECK 'CORRECT'

'1'= PARITY CHECK 'FAILED'

FIG.6

4

# 0 103 438

| | |
|---|---|
| 14 | SUBSCRIBER IDENT., NO. (16000) |
| 2 | READ/WRITE |
| 9 | FUNCTION ADDRESS + NIBBLE IDENT. |

| READ | | | | WRITE |
|---|---|---|---|---|
| 9 | RPS FREQUENCY | OR | 8 | DATA TO BE WRITTEN INTO RAM |
| 3 | RPS TYPE | | 4 | UNUSED |

| | |
|---|---|
| 1 | INHIBIT RPS |
| 1 | COUNTDOWN CLOCK |
| 5 | SCRAMBLE CATEGORY |
| 8 | SCRAMBLED FIELD INDICATOR |
| 1 | ENCRYPTED MESSAGE |
| 11 | SPARE |
| | TOTAL = 64 BITS |

FIG.7

5

PACKET XO BYTE
IFC BYTE

13 *

| 1 | 2 | 3 | 4 | 5 | 6 | 7 | 8 | 9 | 10 | 11 | 12 | 13 | 14 | 15 | 16 |
|---|---|---|---|---|---|---|---|---|----|----|----|----|----|----|----|
| 17 | 18 | 19 | 20 | 21 | 22 | 23 | 24 | 25 | 26 | 27 | 28 | 29 | 30 | 31 | 32 |

SUBSCRIBER IDENT NO. — READ/WRITE — FUNCTION ADDRESS — DATA TRANSFER — INHIBIT R.P.S — COUNTDOWN CLOCK — SCRAMBLE CATEGORY — SCRAMBLE FIELD INDICATOR† — ENCRYPTED MESSAGE† — SPARE

† IF THE SECOND METHOD OF SCRAMBLE INDICATION IS USED (8 FIELDS FORWARD PROCEDURE), THEN 2 BYTES OF IFC ARE NEEDED. "ENCRYPTED MESSAGE" MOVES ONE BYTE TO THE RIGHT, AND "SPARE" REDUCES BY ONE BYTE

PACKETS 1 TO 23 IFC BYTE

5 *

| 1 | 2 | 3 | 4 | 5 | 6 | 7 | 8 | 9 | 10 | 11 | 12 | 13 | 14 | 15 | 16 |
|---|---|---|---|---|---|---|---|---|----|----|----|----|----|----|----|
| 17 | 18 | 19 | 20 | 21 | 22 | 23 | 24 | 25 | 26 | 27 | 28 | 29 | 30 | 31 | 32 |

* TRANSMITTED BYTE RELATED TO FIRST CLOCK RUN IN BYTE BEING BYTE 0

FIG. 8

| FIELDS | 1 | 9 | 17 | 25 | 33 | 41 | 49 |
|---|---|---|---|---|---|---|---|
| INFORMATION FROM CONTROL | SEND S1 | SEND S2 | SEND S3 | SEND S4 | | | |
| TV | | PLAY S1 (SCRAMBLE | PLAY S2 RELATED) | PLAY S3 | | | |
| RAM n | LOAD S1 | READ S1 | LOAD S3 | READ S3 | | | |
| RAM n+1 | | LOAD S2 | READ S2 | LOAD S4 | | | |
| | | | | | | | |
| | | | | | | | |
| INFORMATION FROM CONTROL | S1 | | S2 | | S3 | | S4 |
| TV | | PLAY S1 | PLAY S1 | PLAY S2 | PLAY S2 | PLAY S3 | PLAY S3 |
| RAM n | LOAD S1 | READ S1 | READ S1 | EMPTY S1 | LOAD S3 | READ S3 | READ S3 |
| RAM n+1 | | | LOAD S2 | READ S2 | READ S2 | EMPTY S2 | LOAD S4 |
| | | | TOGGLE | | | TOGGLE | |

FIG.9

0 103 438

FIG.10

FIG.11